# EUROPEAN PATENT APPLICATION

(11) **EP 3 674 010 A1**
(43) Date of publication of application: **01.07.2020**
(21) Application number: 18848810.0
(22) Date of filing: 24.08.2018
(51) Int. Cl.: B21D 7/024, B21D 7/025, B21D 43/00, B21D 43/12, B25J 13/00

(54) **BENDING MACHINE**

(30) Priority: 25.08.2017 JP 2017162643
(71) Applicant: Opton Co., Ltd., Seto-shi, Aichi 489-8645 (JP)
(72) Inventor: YOGO, Teruaki, Seto-shi Aichi 489-8645 (JP)
(74) Representative: AWA Sweden AB
(86) International application number: PCT/JP2018/031370
(87) International publication number: WO 2019/039592

(57) **Abstract**

A bending machine includes a first track device and a second track device arranged in parallel to extend along straight lines parallel to each other. A first base and a first robot are movable on the first track device, and a second base and a second robot are movable on the second track device. Each of the first robot and the second robot is a multi-articulated robot. A first bending mechanism, which grips and bends the workpiece, is arranged at one end of the first robot, and a second bending mechanism, which grips and bends the workpiece, is arranged at one end of the second robot. A workpiece feeding device to supply the workpiece is provided at a position that is on one end side in an extending direction of the first track device and the second track device and is reachable by at least one of the first bending mechanism and the second bending mechanism. The workpiece feeding device is configured to feed the workpiece in a manner that a longitudinal direction of the workpiece is orthogonal to the extending direction of the first track device and the second track device.

## Description

### CROSS-REFERENCE TO RELATED APPLICATIONS

This international application claims the benefit of Japanese Patent Application No. 2017-162643 filed on August 25, 2017 with the Japan Patent Office, and the entire disclosure of Japanese Patent Application No. 2017-162643 is incorporated herein by reference.

### TECHNICAL FIELD

The present disclosure relates to a bending machine configured to bend an elongated workpiece.

### BACKGROUND ART

There has been conventionally known a bending machine that bends an elongated workpiece at plural positions (see, for example, Patent Document 1). In this bending machine, a bending mechanism is attached to a distal end of a multi-articulated robot, which is configured to grip and bend the workpiece. Further, Patent Document 1 describes that, in order to improve a processing speed of the workpiece, a pair of track devices are arranged in parallel extending along parallel straight lines, and bases, on which the multi-articulated robots are respectively mounted, are respectively placed on the track devices so that the bases are movable on the track devices. In this case, the two multi-articulated robots work cooperatively, and it is thus possible to bend the workpiece rapidly.

### PRIOR ART DOCUMENTS

### PATENT DOCUMENTS

Patent Document 1: Japanese Unexamined Patent Application Publication No. 2016-203181

### SUMMARY OF THE INVENTION

### PROBLEMS TO BE SOLVED BY THE INVENTION

In such conventional bending machine, when the above-described track devices are provided, a workpiece has been generally supplied to the bending machine so that an extending direction of the track devices is parallel to the longitudinal direction of the workpiece. In this case, when the pair of track devices is arranged in parallel, a workpiece feeding device to automatically feed the workpiece is arranged in parallel with each track device. However, depending on the factory layouts, it is in some cases preferable that the workpiece feeding device is provided, relative to the pair of track devices, on one end of the extending direction of the track devices. Therefore, it is desirable to improve the degree of freedom of the layout of the bending machine as a whole.

According to an aspect of the present disclosure, it is an object to provide a workpiece feeding device on one end of an extending direction of a track device and thus to improve the degree of freedom of the layout of the bending machine as a whole.

### MEANS FOR SOLVING THE PROBLEMS

A bending machine of the present disclosure is a bending machine configured to bend an elongated workpiece and includes a first track device, a second track device, a first base, a second base, a first robot, a second robot, a first bending mechanism, a second bending mechanism, and a workpiece feeding device.

The first track device and the second track device are arranged in parallel to extend along straight lines parallel to each other. The first base is placed on the first track device and movable on the first track device. The first robot is mounted on the first base. The second base is placed on the second track device and movable on the second track device. The second robot is mounted on the second base. The first bending mechanism arranged at one end of the first robot and the second bending mechanism arranged at one end of the second robot are configured to grip and bend the workpiece. The workpiece feeding device is provided on one end side in an extending direction of the first track device and the second track device and configured to feed the workpiece,

The first robot is a multi-articulated robot that is provided with a plurality of joints including at least a first joint that rotates the first robot around a vertical axis relative to the first base on which the first robot is mounted and a second joint that bends the first robot around an axis nonparallel to an axis of the first joint of the first robot, and the first robot moves the first bending mechanism by operations of the first and second joints. The second robot is a multi-articulated robot that is provided with a plurality of joints including at least a first joint that rotates the second robot around a vertical axis relative to the second base on which the second robot is mounted and a second joint that bends the second robot around an axis nonparallel to an axis of the first joint of the second robot, and the second robot moves the second bending mechanism by operations of the joints. The workpiece feeding device is arranged at a position that is reachable by at least one of the first bending mechanism and the second bending mechanism. The workpiece feeding device feeds the workpiece in a manner that a longitudinal direction of the workpiece is orthogonal to the extending direction of the first track device and the second track device.

In the bending machine configured as described above, the workpiece feeding device is provided on one end side in the extending direction of the first track device and the second track device and is configured to feed the workpiece. Further, the workpiece feeding device feeds the workpiece in a manner that the longitudinal direction of the workpiece is orthogonal to the extending direction of the first track device and the second track device. Therefore, it is possible to improve the degree of freedom of the layout of the bending machine as a whole.

The first robot at least includes the first joint that rotates the first robot around the vertical axis relative to the first base on which the first robot is mounted and the second joint that bends the first robot around the axis nonparallel to the axis of the first joint of the first robot. Accordingly, the first robot can move the first bending mechanism configured to grip and bend the workpiece in various directions relative to the first base. Likewise, the second robot at least includes the first joint that rotates the second robot around the vertical axis relative to the second base on which the second robot is mounted and the second joint that bends the second robot around the axis nonparallel to the axis of the first joint of the second robot. Therefore, the second robot can move the second bending mechanism configured to grip and bend the workpiece in various directions relative to the second base. Further, the workpiece feeding device is arranged at a position that is reachable by at least one of the first bending mechanism and the second bending mechanism. Therefore, it is possible to easily grip the workpiece supplied from the workpiece feeding device with at least one of the first bending mechanism and the second bending mechanism even when the workpiece feeding device is arranged on one end side in the extending direction of the first track device and the second track device so that bending can be applied to the workpiece.

The bending machine of the present disclosure may include a chuck device, which is arranged between the first track device and the second track device separately from the first track device and the second track device and is configured to grip the workpiece. The chuck device may be configured to grip the workpiece conveyed by at least one of the first robot and the second robot.

In this case, the chuck device can grip the workpiece conveyed by at least one of the first robot and the second robot from the workpiece feeding device, and the first bending mechanism and the second bending mechanism can apply bending to the workpiece. Accordingly, in this case, it is possible to improve further favorably a machining speed of the workpiece.

Further, the bending machine may include a controller as described below, and a connection relation among the joints of the first robot and the first bending mechanism and a connection relation among the joints of the second robot and the second bending mechanism may be configured to be identical to each other. The controller is configured to control operations of the first base, the second base, the first robot, the second robot, the first bending mechanism, the second bending mechanism, and the chuck device. When the controller allows the first bending mechanism and the second bending mechanism to grip the workpiece supplied by the workpiece feeding device, the controller controls the operations of the first joint and the second joint of the first robot and the operations of the first joint and the second joint of the second robot so that rotation positions around the first joints are different by 180 degrees between the first robot and the second robot, and a direction from the second joint of the first robot towards the first bending mechanism and a direction from the second joint of the second robot towards the second bending mechanism coincide with respectively directions from the respective second joints towards the workpiece feeding device.

As described above, when the chuck device arranged between the first track device and the second track device grips the workpiece and the first robot and the second robot configured in the same manner bend the workpiece, the first robot and the second robot are often directed in directions different from each other by 180 degrees about the vertical axis. It is because the first robot and the second robot have sides where bending is easy if the sides (hereinafter, referred to as front sides) are directed to the workpiece side. It is preferable to direct the front sides of the first robot and the second robot to the workpiece gripped by the chuck device.

The controller controls the first bending mechanism and the second bending mechanism to grip the workpiece supplied from the workpiece feeding device from a state where the first robot and the second robot have been directed in the directions different from each other by 180 degrees about the vertical axes. The operations of the respective robots until gripping the workpiece by the chuck device and starting bending from the above state are the same at least in terms of the operations and the like about the vertical axes. The connection relation among the joints of the first robot and the first bending mechanism (e.g., distance between the joints) and the connection relation among the joints of the second robot and the second bending mechanism may be configured to be identical to each other. Therefore, control programs related to the first robot and the second robot and so on may be shared or common at least partially.

According to the present disclosure, the workpiece feeding device may include a first conveyor, a second conveyor, and a third conveyor as described below. The first conveyor includes a plurality of holders configured to hold the workpieces one by one, move the workpieces up temporarily, and move the workpieces down. The second conveyor is configured to supply the workpieces to the holders of the first conveyor. The third conveyor is configured to convey the workpieces, which have been moved up temporarily and then moved down by the holders of the first conveyor, one by one to a position where at least one of the first bending mechanism and the second bending mechanism can grip the workpiece.

In this case, it is possible to hold in advance the workpieces one by one in the respective holders of the first conveyor. The holders orbit to go up temporarily and then come down. Accordingly, it is possible for the first conveyor to have many holders even in a limited space, and thus the operation to supply the workpieces one by one is performed stably.

The second conveyor supplies the workpieces to the holders of the first conveyor. The workpieces having been moved up temporarily and then moved down by the holders of the first conveyor are conveyed one by one to a position where the workpiece can be gripped by at least one of the first bending mechanism and the second bending mechanism.

In this case, the bending machine may further include a speed controller configured to increase a drive speed of the second conveyor when the number of the holders holding the workpieces is less than a predetermined number, compared to a case where the number is equal to or greater than the predetermined number.

When the workpieces are held one by one by the predetermined number or more of holders of the first conveyor, or specifically for example when the workpieces are held one by one by all the holders, it is possible to perform the operation to supply the workpieces one by one to the third conveyor remarkably stably and immediately. However, when the number of holders holding the workpieces is smaller than the predetermined number, or for example when no holder holds the workpiece, it becomes difficult to supply the workpieces to the third conveyor immediately. In this case, it is possible to shorten the time, in which the supply of the workpiece to the third conveyor becomes sluggish, by increasing the drive speed of the second conveyor compared to the case where the number of holders holding the workpieces is equal to or greater than the predetermined number.

In the bending machine of the present disclosure, each of the first bending mechanism and the second bending mechanism includes a bending die and a clamping die, which is engaged with the bending die, and may be configured to grip and bend the workpiece by pinching the workpiece with the bending die and the clamping die. In this case, it is possible to bend the workpiece accurately along the bending die and to bend the workpiece accurately.

In the bending machine of the present disclosure, each of the first robot and the second robot may be a vertical multi-articulated robot having six axes or more. In this case, it is possible to improve the degree of freedom of the operations of the first bending mechanism and the second bending mechanism and also the degree of freedom of bending the workpiece.

In the present disclosure, the terms of "vertical", "orthogonal", "same", or "identical" are not strictly limited to being vertical, being orthogonal, being the same, or being identical. As far as the effects to be objected are yielded, they need not mean strictly being vertical, orthogonal, same, or identical.

### BRIEF DESCRIPTION OF THE DRAWINGS

Fig. 1 is a plan view illustrating an entire structure of a bending machine according to a first embodiment of the present disclosure.
Fig. 2 is a side view illustrating a first track device, a second track device, a first robot, a second robot, and a chuck device of the bending machine of the first embodiment.
Fig. 3 is a side view illustrating the first robot of the bending machine of the first embodiment in an enlarged scale.
Fig. 4 is a plan view illustrating the first robot of the first embodiment in an enlarged scale.
Fig. 5 is a side view schematically illustrating a vicinity of a first base of a first robot device on the first track device of the bending machine of the first embodiment in an enlarged scale.
Fig. 6 is a front view illustrating a workpiece feeding device of the bending machine of the first embodiment in an enlarged scale.
Fig. 7 is a block diagram illustrating an electric configuration of the bending machine of the first embodiment.
Fig. 8 is a flowchart illustrating a part of a process executed by a controller of the bending machine of the first embodiment.
Fig. 9 is a plan view schematically illustrating operations of the first robot and the second robot in the process of the first embodiment.
Fig. 10 is a plan view schematically illustrating continued operations of the first robot and the second robot according to the first embodiment.
Fig. 11 is a plan view schematically illustrating further continued operations of the first robot and the second robot according to the first embodiment.
Fig. 12 is a plan view schematically illustrating further continued operations of the first robot and the second robot according to the first embodiment.
Fig. 13 is a plan view schematically illustrating further continued operations of the first robot and the second robot according to the first embodiment.
Fig. 14 is a plan view schematically illustrating further continued operations of a first robot and a second robot according to a second embodiment of the present disclosure.
Fig. 15 is a flowchart illustrating a part of a process by a controller of a bending machine of the second embodiment.
Fig. 16 is a plan view schematically illustrating operations of the first robot and the second robot in the process of the second embodiment.
Fig. 17 is a plan view schematically illustrating further continued operations of the first robot and the second robot according to the second embodiment.
Fig. 18 is a plan view schematically illustrating further continued operations of the first robot and the second robot according to the second embodiment.
Fig. 19 is a plan view schematically illustrating further continued operations of the first robot and the second robot according to the second embodiment.

### EXPLANATION OF REFERENCE NUMERALS

2...bending machine, 4...first track device, 5...second track device, 6...first base, 8...second base, 10...first robot, 11...first robot device, 12...second robot, 13...second robot device, 16...chuck device, 18...workpiece, 20...workpiece feeding device, 50a...first bending mechanism, 50b...second bending mechanism, 52...first swinging joint, 54...second swinging joint, 56...third swinging joint, 58...first turning joint, 60...second turning joint, 62...third turning joint, 66...first turntable, 68...first arm, 70...second arm, 80...bending die, 88...clamping die, 90...pressure die, 102...first auxiliary track device, 122...controller, 202...second auxiliary track device, 204...first conveyor, 206...second conveyor, 208...third conveyor, 216...first chain, 244...second chain, 220...holder, 234...belt, 236...stopper, 246...receiver, 250...feeding spot.

### MODE FOR CARRYING OUT THE INVENTION

Hereinafter, embodiments for carrying out the present disclosure will be described in detail with reference to the drawings. The present disclosure is not limited to the following embodiments, and any other modes may be adopted within a technical scope of the present disclosure.

### [First Embodiment]

Described below is an entire configuration of a bending machine of a first embodiment.

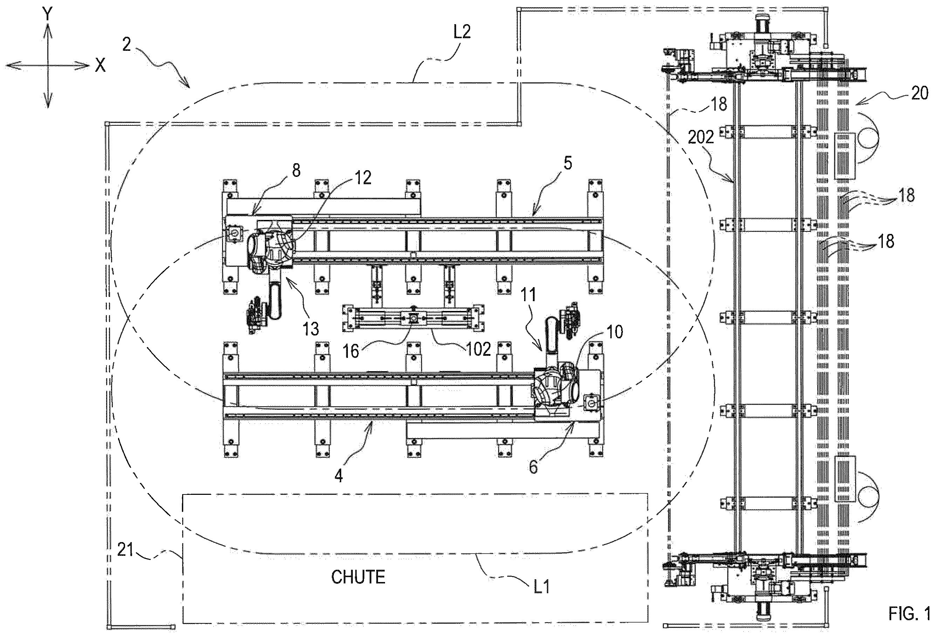

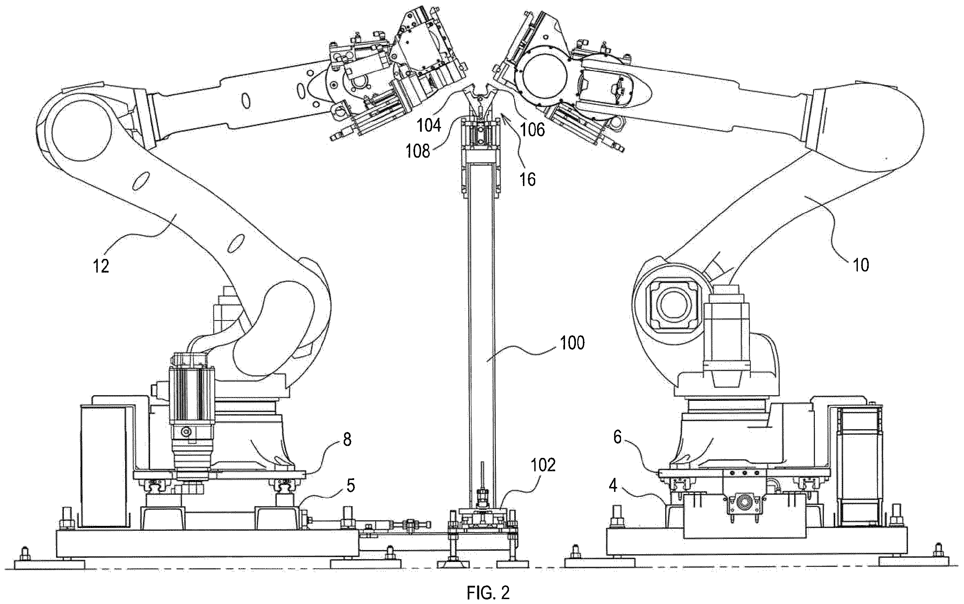

As illustrated in Figs. 1 and 2, the bending machine 2 of the first embodiment includes a first track device 4, a second track device 5, a first base 6, a second base 8, a first robot 10, and a second robot 12.

The first track device 4 and the second track device 5 are arranged in parallel so as to extend linearly in a right and left direction (hereinafter, referred to as X direction) in Fig. 1. The first base 6 is mounted on the first track device 4 and is movable in a longitudinal direction (X direction) of the first track device 4. The second base 8 is mounted on the second track device 5 and is movable in a longitudinal direction (X direction) of the second track device 5. The first robot 10 is mounted on the first base 6. The second robot 12 is mounted on the second base 8. The first base 6 and the first robot 10 are referred to as a first robot device 11. The second base 8 and the second robot 12 are referred to as a second robot device 13.

The bending machine 2 further includes a chuck device 16, a workpiece feeding device 20 (i.e., loader), and a chute 21. The chuck device 16 is disposed between the first track device 4 and the second track device 5 separately therefrom. The chuck device 16 grips an elongated workpiece 18 (i.e., work) such as a pipe so that a longitudinal direction of the workpiece 18 coincides with the X direction. The workpiece feeding device 20 supplies the workpiece 18 in a manner that the longitudinal direction of the workpiece 18 is orthogonal to an extending direction of the first track device 4 and the second track device 5 (i.e., X direction). The chute 21 is arranged within an operating area of at least one of the first robot device 11 and the second robot device 13 (within an area illustrated by a two-dot chain line 21 according to an example in Fig. 1). Conveyed to the chute 21 is the workpiece 18 after bending.

An area surrounded by a two-dot chain line L1 in Fig. 1 is an operating area of the first robot device 11 (specifically, area in which an operation to grip the workpiece 18 is possible). An area surrounded by a two-dot chain line L2 in Fig. 1 is an operating area of the second robot device 13 (specifically, area in which an operation to grip the workpiece 18 is possible).

Described in detail below is a configuration of each portion of the bending machine 2. The first robot device 11 and the second robot device 13 have fundamentally the same configuration. That is, the first robot device 11 and the second robot device 13 are configured in a manner that connection relations of joints and a below-described first bending mechanism 50a of the first robot device 11 are the same as connection relations of joints and a below-described second bending mechanism 50b of the second robot device 13. The first track device 4 and the second track device 5 have fundamentally the same configuration. Therefore, hereinafter, the first track device 4 and the first robot device 11 are described as an example.

### <First Track Device 4>

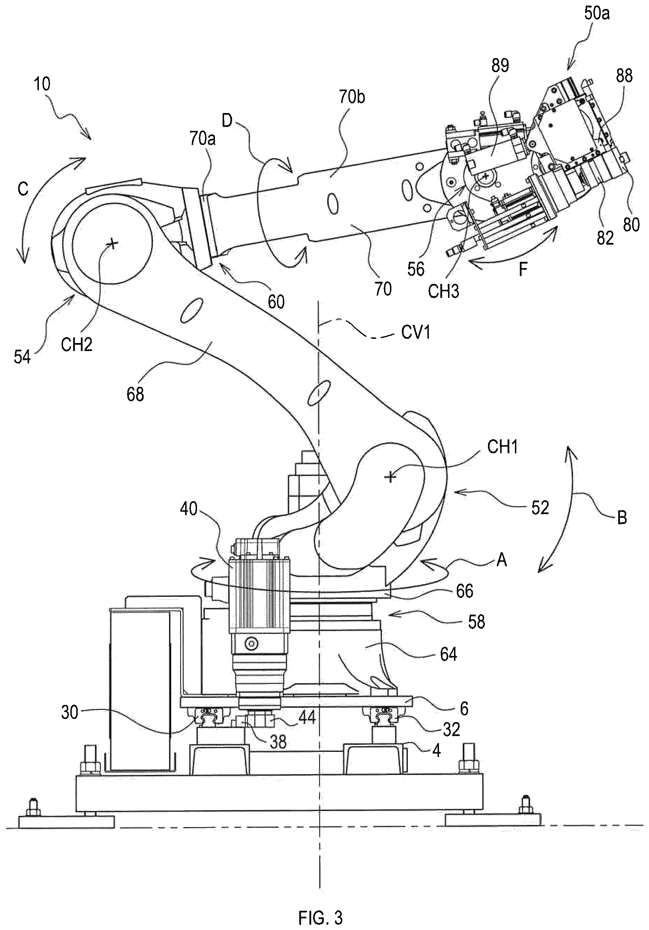

As illustrated in Fig. 3, the first base 6 is arranged on the first track device 4 so as to be movable in a direction orthogonal to a paper surface of Fig. 3 (X direction).

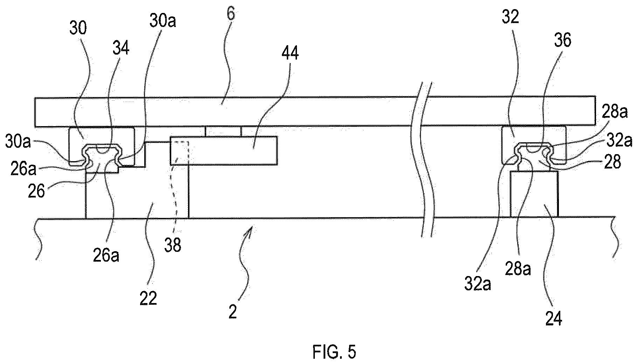

More specifically, as schematically illustrated in Fig. 5, the first track device 4 includes a first rail 26 and a second rail 28. The first rail 26 is arranged on a convex-shaped first base portion 22 illustrated on the left side of Fig. 5 and extends in parallel with the X direction. The second rail 28 is arranged on a second base portion 24 illustrated on the right side of Fig. 5 and extends in parallel with the X direction. The cross-sectional shape of the first rail 26 has concave portions 26a on both sides in the right and left direction (Y direction, which is a direction orthogonal to the X direction and the vertical direction). The cross-sectional shape of the second rail 28 has concave portions 28a on both sides in the right and left direction in Fig. 5 (Y direction).

Arranged on a lower surface of the first base 6 are a first guide 30 and a second guide 32. The distance between the centers of the first guide 30 and the second guide 32 in the Y direction is the same as the distance between the centers of the first rail 26 and the second rail 28 in the Y direction. The first guide 30 is, for example, a known LM guide (registered trademark) and is formed with a first groove 34 on its lower surface side, which is fitted to the first rail 26. The second guide 32 is, for example, a known LM guide (registered trademark) and is formed with a second groove 36 on its lower surface side, which is fitted to the second rail 28.

First convex portions 30a are formed on both sides of the first groove 34 in the Y direction. The first convex portions 30a are engaged in an up and down direction in Fig. 5 with the concave portions 26a on both sides of the first rail 26 in the Y direction and are configured in a manner that the first guide 30 does not come off upwards in Fig. 5. Second convex portions 32a are formed on both sides of the second groove 36 in the Y direction. The second convex portions 32a are engaged in the up and down direction in Fig. 5 with the concave portions 28a on both sides of the second rail 28 in the Y direction and are configured in a manner that the second guide 32 does not come off upwards in Fig. 5.

A rack (rack gear) 38 is formed along the X direction at an upper-right end of the first base portion 22 in Fig. 5 (right surface side in Fig. 5). A motor 40 for the base (see Fig. 3) is fixed to an upper surface side of the first base 6. Arranged on the lower surface side of the first base 6 is a pinion gear 44 driven by the base motor 40. The rack 38 and the pinion gear 44 are arranged to be engaged.

Accordingly, when the base motor 40 is driven, the first base 6 (and therefore first robot device 11) moves in the X direction along the first track device 14 by the rack 38 and the pinion gear 44.

### <First Robot 10>

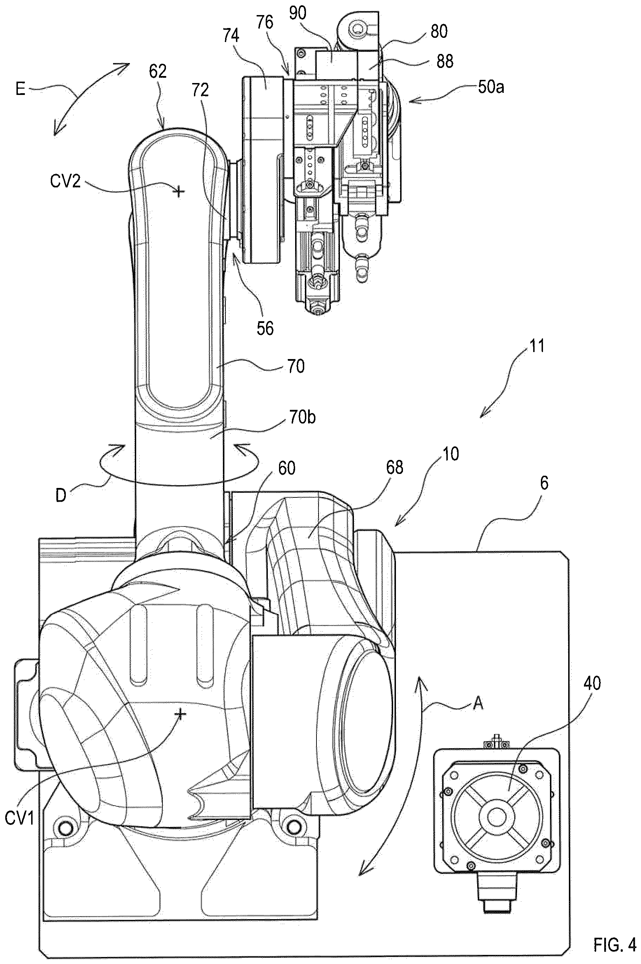

As illustrated in Figs. 3 and 4, the first robot 10 is an articulated robot (multi articulated robot) having a plurality of arms and joints. Attached to a distal end of the first robot 10 is the first bending mechanism 50a that grips and bends the elongated workpiece 18 such as a pipe.

The first robot 10 includes: first, second, and third swinging joints 52, 54, 56 (total three), each of which allows two members connected via the joint to swing, i.e., to perform a bending operation; and first, second, and third turning joints 58, 60, 62, each of which allows one member to perform a turning operation relative to another member connected to the one member via the joint. An axial direction of the swinging joint is orthogonal to a linking direction of the two members. An axial direction of the turning joint is the same as the linking direction of the two members.

More specifically, the first robot 10 includes a fixing portion 64 attached to the first base 6. The fixing portion 64 and a first turntable 66 are connected by the first turning joint 58. The first turning joint 58 includes a mechanism that rotatably drives the first turntable 66 by a predetermined angle around a vertical axis CV1. As illustrated in Fig. 3 and Fig. 4, the turning direction of the first turntable 66 is denoted by an arrow A.

The first turntable 66 is connected to one end of a first arm 68 via the first swinging joint 52. The first swinging joint 52 includes a mechanism that rotatably drives the first arm 68 by a predetermined angle around a horizontal axis CH1. The horizontal axis CH1 of the first swinging joint 52 and the vertical axis CV1 of the first turning joint 58 are orthogonal to each other. The turning direction of the first arm 68 is denoted by an arrow B in Fig. 3.

The other end of the first arm 68 and one end of a second arm 70 are connected via the second swinging joint 54. The second swinging joint 54 includes a mechanism that rotatably drives the second arm 70 by a predetermined angle around an axis CH2 parallel to the horizontal axis CH1 of the first swinging joint 52. The turning direction of the second arm 70 is denoted by an arrow C in Fig. 3.

The second arm 70 is provided with the second turning joint 60, and a rear part 70b of the second arm 70 can perform a torsional movement relative to a front part 70a of the second arm 70 about a turning axis centering an axis of the second arm 70. The turning direction of the rear part 70b is denoted with an arrow D in Fig. 3 and Fig. 4.

As illustrated in Fig. 4, a second turntable 72 is connected to the other end of the second arm 70 via the third turning joint 62. The third turning joint 62 has a mechanism that rotatably drives the second turntable 72 by a predetermined angle around an axis CV2 orthogonal to the horizontal axis CH1 of the first swinging joint 52 and the horizontal axis CH2 of the second swinging joint 54. The turning direction of the second turntable 72 is denoted with an arrow E in Fig. 4.

The second turntable 72 is connected to one end of a distal end arm 74 via the third swinging joint 56. The third swinging joint 56 turns the distal end arm 74 about an axis CH3 illustrated in Fig. 3. The turning direction of the distal end arm 74 is denoted by an arrow F in Fig. 3. It is to be noted that the third turning joint 62 and the second turntable 72 illustrated in Fig. 4 are hidden by other members in Fig. 3 and are not shown in Fig. 3.

As illustrated in Fig. 4, a rotatable auxiliary joint 76 is provided at a distal end of the distal end arm 74, and the first bending mechanism 50a is attached to the auxiliary joint 76. The auxiliary joint 76 is mechanically connected to the third swinging joint 56 with a non-illustrated gear mechanism. The gear mechanism is a known gearbox configured to control an output rotational speed to be greater than an input rotational speed.

When the distal end arm 74 is rotated by 360 degrees by the third swinging joint 56, the first bending mechanism 50a is configured to rotate over 360 degrees by virtue of the auxiliary joint 76. According to the above-described configuration, it is possible to rotate the first bending mechanism 50a around the workpiece 18 without being obstructed by the workpiece 18.

According to the above described example, the auxiliary joint 76 is mechanically connected to the third swinging joint 56 via the non-illustrated gear mechanism. However, the present disclosure is not limited hereto. The auxiliary joint 76 may be configured to be rotated, for example, by a separate drive motor independently from the third swinging joint 56.

### <First Bending Mechanism 50a>

As illustrated in Fig. 3 and Fig. 4, the first bending mechanism 50a is provided with a bending die 80 that is formed with a groove 82 around its axis. In the example illustrated in Fig. 3, the groove 82 of the bending die 80 is a single type. However, the present disclosure is not limited hereto. For example, plural grooves corresponding to plural bending radii may be formed and stacked in an axial direction of the bending die 80.

The first bending mechanism 50a is provided with a clamping die 88 that cooperates with the bending die 80 to grip the workpiece 18. The clamping die 88 is driven by a cylinder 89 and is moved towards the bending die 80. Further, a pressure die 90 is provided adjacent to the clamping die 88 and is applied with reaction force at bending. The pressure die 90 is driven by a cylinder, which is provided independently from the cylinder 89 and not illustrated, and then moved towards the bending die 80. The clamping die 88 rotates around the bending die 80 while gripping the workpiece 18 between the clamping die 88 and the groove 82, thereby allowing the workpiece 18 to be bent by a predetermined angle.

### <Chuck Device 16>

As illustrated in Fig. 2, the chuck device 16 is mounted on a first auxiliary track device 102 extending in the X direction and is manually movable in a direction orthogonal to the sheet surface of Fig. 2 (the X direction). The chuck device 16 is supported at an upper end of a support column 100 that is supported and erected by the first auxiliary track device 102 so as to be movable in the X direction.

The chuck device 16 includes a first claw 104 and a second claw 106 provided at the upper end of the support column 100. About a shaft 108 that is provided at the upper end of the support column 100 and extends in the X direction, the portions of the first claw 104 and the second claw 106 above the shaft 108 can swing in the Y direction. At upper ends of the first claw 104 and the second claw 106, concave portions are formed on the sides facing each other. When the upper ends of the first claw 104 and the second claw 106 approach each other above the shaft 108, the workpiece 18 can be gripped there. The first claw 104 and the second claw 106 are driven by a non-illustrated link mechanism and a non-illustrated drive unit in a manner that the upper ends of the first claw 104 and the second claw 106 approach or separate from each other. According to the present example, the chuck device 16 is configured so that the workpiece 18 gripped by the chuck device 16 becomes horizontal, i.e., becomes orthogonal to the vertical axis CV1 of the first turning joint 58.

### <Workpiece Feeding Device 20>

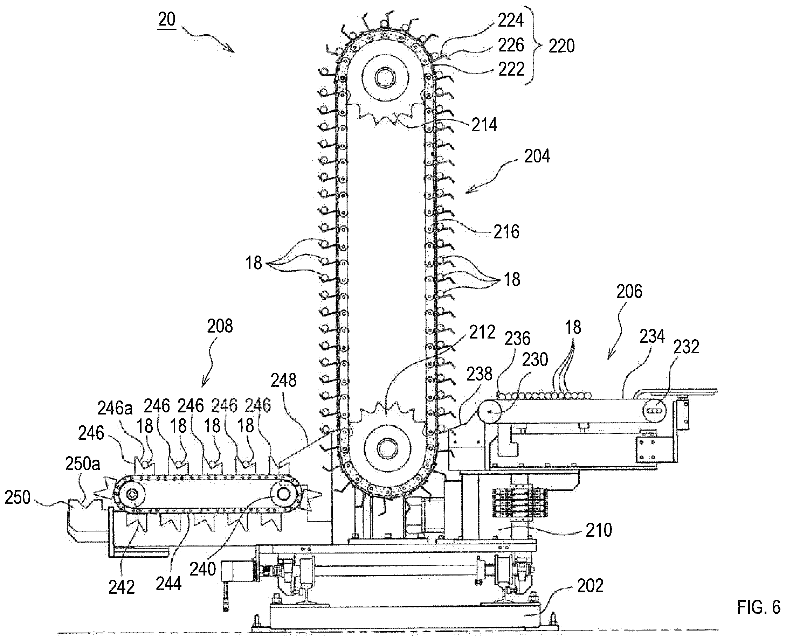

As illustrated in Fig. 6, the workpiece feeding device 20 is provided with a first conveyor 204, a second conveyor 206, and a third conveyor 208, all of which are movable in the Y direction along a second auxiliary track device 202. The first conveyor 204 is what we call a stock conveyor, the second conveyor 206 is what we call a stock pipe conveyor, and the third conveyor 208 is what we call a bender conveyor. The relative position of the first conveyor 204, the second conveyor 206, and the third conveyor 208 is determined by a frame 210. By the movement of the frame 210 along the second auxiliary track device 202, the first conveyor 204, the second conveyor 206, and the third conveyor 208 move in the Y direction while maintaining the relative position.

The first conveyor 204 has a configuration, in which a chain 216 is stretched between a first sprocket 212 and a second sprocket 214 arranged in the up and down direction, and rotates in a counterclockwise direction in Fig. 6. The chain 216 has holders 220 (i.e., stockers) each provided at every link of the chain 216.

Each holder 220 has a first flat plate 222, a second flat plate 224, and a third flat plate 226, all of which are obtained by bending a metal. The first flat plate 222 moves while rotating along the link direction of the chain 216. The second flat plate 224 is connected to an end edge of the forward side in the rotating direction of the first flat plate 222 and tilts to the forward side in the rotating direction from the normal line to the first flat plate 222. The third flat plate 226 is connected to the distal end of the second flat plate 224 (i.e., an end edge opposite from the first flat plate 222) and tilts to the rearward side in the rotating direction from the normal line to the first flat plate 222.

The second conveyor 206 is provided with a first roller 230 and a second roller 232 arranged in line in the right and left direction (i.e. the X direction) in Fig. 6, and a belt 234 stretched horizontally between the first roller 230 and the second roller 232. When at least one of the first roller 230 and the second roller 232 is driven to rotate in a counterclockwise direction in Fig. 6, the belt 234 conveys the workpieces 18 placed on the belt 234 towards the first conveyor 204. A stopper 236 is provided on a convey passage of the second conveyor 206 and is controlled by an actuator (not shown) to switch between projecting and retreating. The timing of switching between the projecting and the retreating of the stopper 236 is controlled in response to the size (e.g., diameter) of the workpiece 18. The workpieces 18 conveyed by the belt 234 are separated (i.e., cut out) and conveyed one by one to the downstream side from the stopper 236 in response to the operation of the stopper 236.

A user of the bending machine 2 loads the workpieces 18 carried by a carrier and so on onto the belt 234. After that, the workpiece 18 conveyed to the left end of the belt 234 in Fig. 6 falls along a first guide 238 to the first conveyor 204. Then, each workpiece 18 is held one by one by the first flat plate 222 of the holder 220 and the second flat plate 224 of the other holder 220, which is adjacent to the former holder 220 on the rear side of the former holder 220 in the rotating direction, and is conveyed upward.

If the holder 220 passes the area above the second sprocket 214, the workpiece 18 is held by the second flat plate 224 and the third flat plate 226 of the holder 220 on the forward side in the rotating direction and goes down. When the workpiece 18 comes down to a predetermined position, the workpiece 18 engages with a second guide 248 and falls to the third conveyor 208.

The third conveyor 208 has a configuration in which a chain 244 is stretched between a first sprocket 240 and a second sprocket 242 arranged in line in the right and left direction (i.e., the X direction) in Fig. 6, and rotates in the counterclockwise direction in Fig. 6. Receivers 246 are provided at an outer periphery of the chain 244 at every predetermined link/links of the chain 244. Each receiver 246 is formed into a plate shape to be protruded further upward when the receiver 246 is arranged above the chain 244 and is formed with a notch 246a at its center to receive the workpiece 18.

The workpieces 18 dropped along the second guide 248 are received by the notches 246a respectively and conveyed one by one to the left side in Fig. 6. The workpiece 18 is dropped to a feeding spot 250 adjacently arranged on the left side of the third conveyor 208 in Fig. 6. Formed on the upper surface of the feeding spot 250 is a notch 250a to receive the workpieces 18. The workpiece 18 conveyed by the third conveyor 208 is received by the notch 250a.

Regarding this set of the first, second, and third conveyors 204, 206, and 208, at least two sets of them are arranged symmetrically to face each other on a track of the second auxiliary track device 202. When the both ends of the workpiece 18 in the longitudinal direction are conveyed by each pair of the first, second, and third conveyors 204, 206, 208, the workpiece 18 is held with its both ends received by the notches 250a of the pair of feeding spots 250. The workpiece 18 gripped as described above can be gripped by the following operations of the first robot device 11 and the second robot device 13.

### <Fundamental Operations of First Robot Device 11 and Second Robot Device 13>

Regarding the first robot device 11, the position of the first robot device 11 in the X direction can be determined by controlling the operation of the first base 6 in the X direction. Regarding the second robot device 13, the position of the second robot device 13 in the X direction can be determined by controlling the operation of the second base 8 in the X direction. For the first robot device 11 and the second robot device 13, the postures or the moving positions of the first bending mechanism 50a and the second bending mechanism 50b can be controlled by turning the first, second, and third swinging joints 52, 54, 56 and the first, second, and third turning joints 58, 60, 62 along with the movements in the X direction.

For example, it is possible to move the first bending mechanism 50a or the second bending mechanism 50b so that the axial direction of the workpiece 18 and the tangential direction of the groove 82 of the bending die 80 match in response to the position to grip the workpiece 18. In addition, it is possible to move the first bending mechanism 50a or the second bending mechanism 50b so that a bending direction of the workpiece 18 and a radial direction of the groove 82 of the bending die 80 match in response to the bending direction of the workpiece 18.

That is, it is possible to change the posture of the first bending mechanism 50a or the second bending mechanism 50b in response to the position to grip the workpiece 18 or the bending direction thereof. According to the first embodiment, there is a synchronized and fixed relation between the third swinging joint 56 and the auxiliary joint 76. Therefore, once the position to grip or the bending direction of the workpiece 18 is determined, the positions of the distal end arm 74 and the third swinging joint 56 are determined.

The second swinging joint 54 is positioned on an arc centering the first swinging joint 52 and having a radius equal to a distance between the first swinging joint 52 and the second swinging joint 54 and on an arc centering the third swinging joint 56 and having a radius equal to a distance between the second swinging joint 54 and the third swinging joint 56. Accordingly, when the second swinging joint 54 is on an intersection point of these two arcs, the position of the bending die 80 is determined. There can be a case where two intersection points exist. In this case, an intersection point is to be selected, at which the second arm 70 does not interfere with the workpiece 18 and a distal end of the workpiece 18 after bending does not interfere with the second arm 70.

As described above, each position of the first, second, and third swinging joints 52, 54, 56 is determined, and thus an angle between the fixing portion 64 and the first arm 68, an angle between the first arm 68 and the second arm 70, and an angle between the second arm 70 and the distal end arm 74 are each obtained. In response to these respectively obtained angles, the first arm 68, the second arm 70, and the distal end arm 74 are turned to their predetermined angles by the first, second, and third swinging joints 52, 54, 56, respectively. Thus, the groove 82 of the bending die 80 is moved to abut the workpiece 18.

Moving the position of the first bending mechanism 50a of the first robot 10 or the position of the second bending mechanism 50b of the second robot 12 in the X direction is enabled by moving the first base 6 or the second base 8 in the X direction by a predetermined moving amount. When the workpiece 18 is applied with bending under the condition that both ends of the workpiece 18 are received by the notches 250a of the pair of feeding spots 250, the first base 6 moves to one end of the first track device 4 on the side of the workpiece feeding device 20 and the second base 8 moves to one end of the second track device 5 on the side of the workpiece feeding device 20. After these movements, by appropriately turning the joints of the first robot 10 and the second robot 12, the workpiece 18, of which both ends are received by the notches 250a as described above, can be gripped by the first bending mechanism 50a of the first robot 10 and the second bending mechanism 50b of the second robot 12.

As described above, when the workpiece 18 with its both ends received by the notches 250a is gripped (i.e., received), there can be two possible methods as below. The one method is a gripping method in which the left side (hereinafter, referred to as front side) of the first robot 10 in Fig. 3 is directed to the side of the workpiece feeding device 20 and the first arm 68 and the second arm 70 are extended towards the front side. Hereinafter, this method is referred to as front side receiving. The other method is a gripping method in which the right side (hereinafter, referred to as rear side) of the first robot 10 in Fig. 3 is directed to the workpiece feeding device 20 and the first arm 68 and the second arm 70 are extended towards the rear side. Hereinafter, this method is referred to as rear side receiving. The workpiece 18 gripped in this way is conveyed to an area above the chuck device 16 by properly moving the first bending mechanism 50a and the second bending mechanism 50b as described above. The workpiece 18 is gripped by the first claw 104 and the second claw 106 and is then applied with the above-described bending. The first robot 10 and the second robot 12 may be respectively designed in a manner that bending may be applied to the workpiece 18 more easily when the front sides thereof are directed to the workpiece 18.

### <Control of Bending Machine 2>

Described below in detail is a control at the time when conveying the workpiece 18 from the workpiece feeding device 20 to the chuck device 16 by the first robot device 11 and the second robot device 13. First, an electric configuration of the bending machine 2 is described.

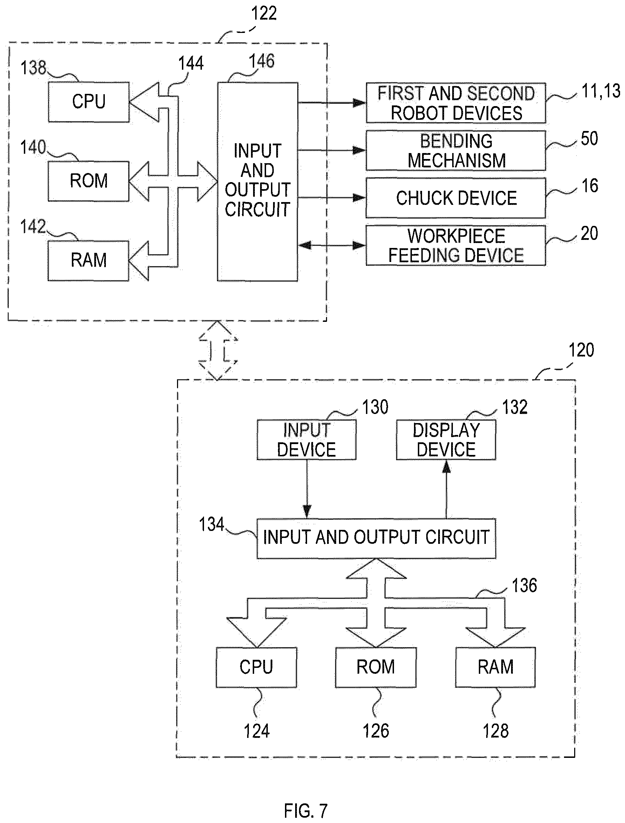

As illustrated in Fig. 7, the bending machine 2 is controlled to be driven by a host computer 120 and a controller 122 so as to process the workpiece 18. The host computer 120 comprises a CPU 124, a ROM 126, and a RAM 128 as a main configuration for a logical operation circuit. The CPU 124, the ROM 126, and the RAM 128 are connected, via a common bus 136, to an input and output circuit 134 that inputs a signal from an input device 130 and outputs a signal to a display device 132. The input device 130 may be a known keyboard or a touch panel type, but is not limited hereto.

Data related to the machining or process performed to the workpiece 18 is inputted to the host computer 120 from the input device 130 operated by an operator. At the host computer 120, programs are created for operating the first robot device 11, the second robot device 13, the first bending mechanism 50a, the second bending mechanism 50b, and the chuck device 16. Then, the created programs are transmitted from the host computer 120 to the controller 122.

The controller 122 comprises a CPU 138, a ROM 140, and a RAM 142 as a main configuration for a logical operation circuit. The CPU 138, the ROM 140, and the RAM 142 are connected, via a common bus 144, to an input and output circuit 146 that is connected to the first robot device 11, the second robot device 13, the first bending mechanism 50a, the second bending mechanism 50b, the chuck device 16, and the workpiece feeding device 20.

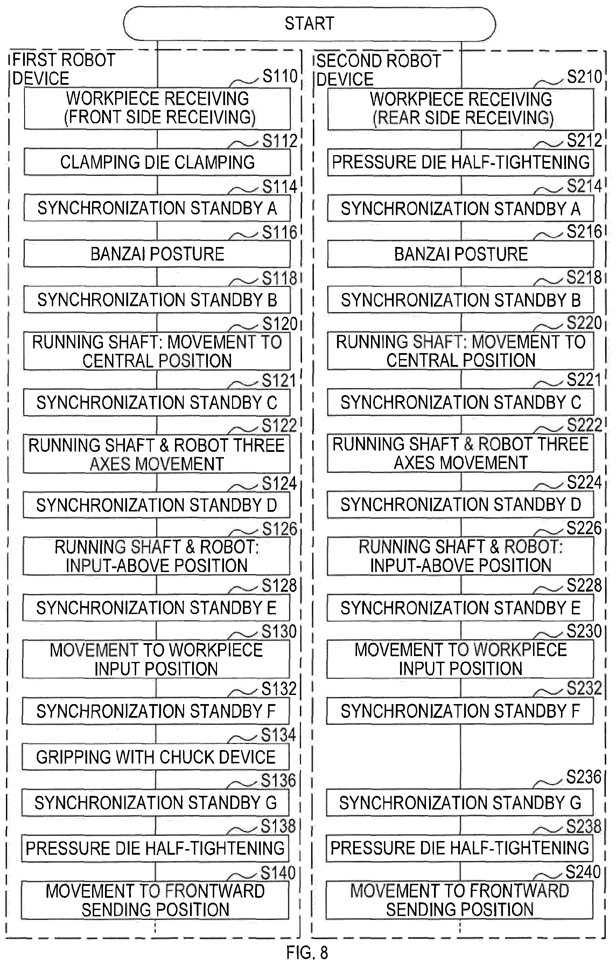

Described next is a control process for the bending machine 2. Here, among the main operations of the bending machine 2, the process implemented by the controller 122 for the operation before the bending by the first bending mechanism 50a and the second bending mechanism 50b is started will be descried based upon the flowchart illustrated in Fig. 8. The process in Fig. 8 is initiated when the both ends of the workpiece 18 are received by the notches 250a of the feeding spots 250 and a signal indicating the receiving is inputted into the controller 122 from the workpiece feeding device 20. This process is implemented by the CPU 138 based upon the programs stored in the ROM 140 and the RAM 142 as storage media.

When the process is started, the controller 122 instructs the first robot device 11 to receive the workpiece 18 by the aforementioned front side receiving (S110) and instructs the second robot device 13 to receive the workpiece 18 by the aforementioned rear side receiving (S210). Hereinafter, the alphabet "S" denotes Step.

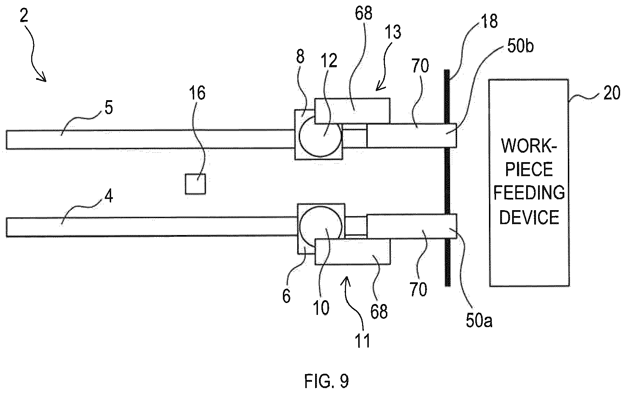

As schematically illustrated in Fig. 9, in response to these instructions, the first robot device 11 and the second robot device 13 move to the ends of the first track device 4 and the second track device 5 on the side of the workpiece feeding device 20, respectively. The first robot 10 is rotated around its first turning joint 58 so that the front side of the first robot 10 faces the workpiece feeding device 20, and the second robot 12 is rotated around its first turning joint 58 so that the rear side of the second robot 12 faces the workpiece feeding device 20. Further, the first bending mechanism 50a of the first robot 10 reaches the workpiece 18 when the first arm 68 and the second arm 70 of the first robot 10 are extended to the front side of the first robot 10. The second bending mechanism 50b of the second robot 12 reaches the workpiece 18 when the first arm 68 and the second arm 70 of the second robot 12 are extended to the rear side of the second robot 12.

Going back to Fig. 8, at a timing where both ends of the workpiece 18 abut the groove 82 of the first bending mechanism 50a of the first robot device 11 and the groove 82 of the second bending mechanism 50b of the second robot device 13 through the above-described processes, the controller 122 executes the processes in S112 and S212 as follows. In S112, the clamping die 88 is clamped to the groove 82 by the cylinder 89, and then the workpiece 18 is fastened between the clamping die 88 and the groove 82 of the first robot device 11. As a result, the workpiece 18 is gripped by the first bending mechanism 50a of the first robot device 11 not to deviate in either longitudinal or thickness direction.

In S212, the pressure die 90 of the second robot device 13 is tightened to the groove 82 at a certain force. As a result, the workpiece 18 is gripped by the second bending mechanism 50b of the second robot device 13 to be able to slidably move in the longitudinal direction but not to deviate in the thickness direction. Such type of gripping is referred to as half-tightening hereinafter.

Next, the controller 122 executes processes for synchronization standby A in S114 and S214. These processes are processes to stand by until the operation to tighten the clamping die 88 in S112 and the operation to half-tighten the pressure die 90 in S212 are both completed.

When the tightening operation and the half-tightening operation are both completed, the controller 122 executes processes in S116 and S216. In S116, the controller 122 controls the first robot 10 to take a posture with the first arm 68 and the second arm 70 extending to the above (hereinafter, Banzai posture). In S216, the controller 122 controls the second robot 12 to take the Banzai posture.

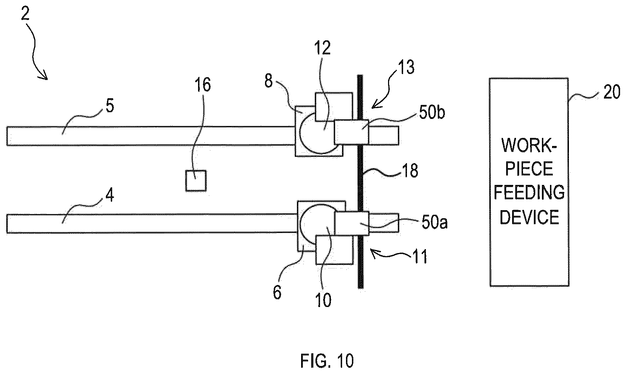

Next, the controller 122 executes processes for synchronization standby B in S118 and S218. These processes are processes to stand by until the operations to take the Banzai postures in S116 and S216 are completed in both of the first robot 10 and the second robot 12. Because the first robot 10 and the second robot 12 take the Banzai postures as described above, as schematically illustrated in Fig. 10, interference regions of the first robot 10 and the second robot 12 become smaller, and thus the first robot 10 or the second robot 12 can be prevented from interfering with surrounding members when rotating about the first turning joint 58.

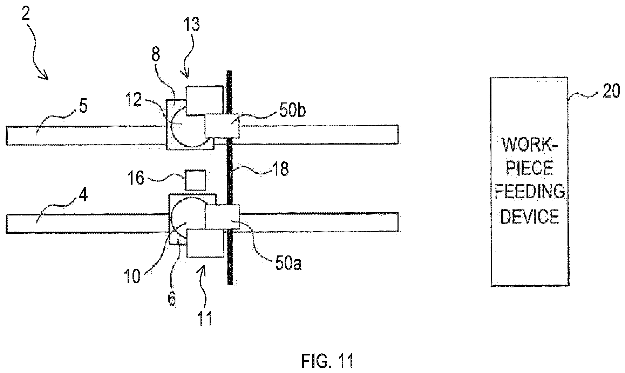

When the operations to take the Banzai postures in Fig. 8 are both completed, the controller 122 executes the processes in S120 and S220. That is, the controller 122 allows the first base 6 and the second base 8 to run to move the first robot device 11 and the second robot device 13 to the positions facing the chuck device 16 (i.e., central positions). Next, the controller 122 executes processes for synchronization standby C in S121 and S221. These processes are processes to stand by until the movements to the central positions in S120 and S220 are completed. Here, as schematically illustrated in Fig. 11, the first robot 10 and the second robot 12 hold the Banzai postures.

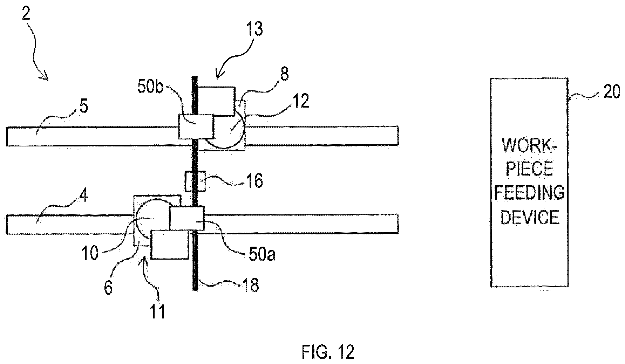

Going back to Fig. 8, when the movements to the central positions are both completed, the controller 122 executes processes in S122 and S222. In these processes, the first, second, and third swinging joints 52, 54, 56 (i.e., three axes) of each of the first robot 10 and the second robot 12 are driven, and the first base 6 and the second base 8 are moved as needed. Thus, the center of the workpiece 18 is arranged above the chuck device 16. Here, as schematically illustrated in Fig. 12, the first arm 68 and the second arm 70 of the second robot 12 are displaced from the state tilted to the rear side of the second robot 12 to the state tilted to the front side of the second robot 12. Following this, going back to Fig. 8, the controller 122 executes processes for synchronization standby D in S124 and S224. These processes are processes to stand by until the movements of the three axes, the first base 6, and the second base 8 are completed, and the center of the workpiece 18 is arranged above the chuck device 16, as described above.

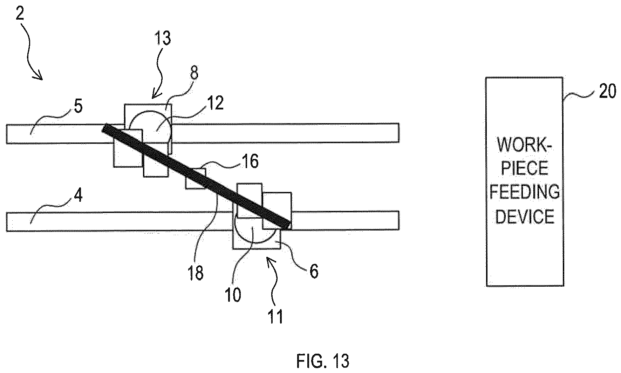

Going back to Fig. 8, when the movements of the three axes of the first, second, third swinging joints 52, 54, 56, the first base 6, and the second base 8 are completed, and the center of the workpiece 18 is arranged above the chuck device 16, the controller executes the processes in S126 and S226. As schematically illustrated in Fig. 13, these processes are processes to move the workpiece 18 to an input-above position by moving the first base 6, the second base 8, the first robot 10, and the second robot 12. An input position is a position where the workpiece 18 can be gripped by the first claw 104 and the second claw 106 of the chuck device 16. The input-above position is a position, from which the workpiece 18 can be brought down by moving the first arms 68 and the second arms 70 of the first robot 10 and the second robot 12, thereby arranging the workpiece 18 at the input position.

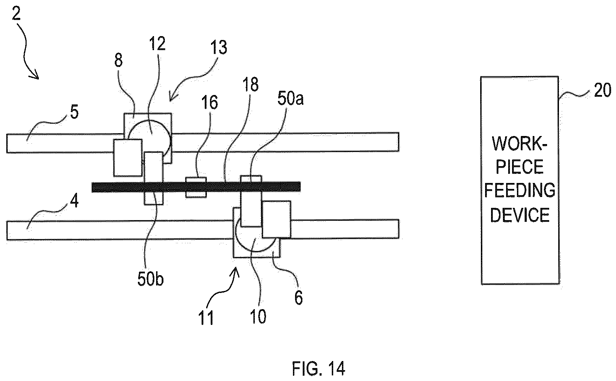

Going back to Fig. 8, the controller 122 executes processes for synchronization standby E in S128 and S228. These processes are processes to stand by until the operations of the first robot device 11 and the second robot device 13 in S126 and S226 are completed and the workpiece 18 is positioned at the input-above position. When the workpiece 18 is arranged at the input-above position, the controller 122 executes processes in S130 and S230. These processes are processes to move the workpiece 18 to the input position by moving the first arms 68 and the second arms 70 of both the first robot 10 and the second robot 12 (or the first arm 68 and the second arm 70 of either the first robot 10 or the second robot 12), as schematically illustrated in Fig. 14. Going back to Fig. 8, the controller 122 next executes processes for synchronization standby F in S132 and S232. These processes are processes to stand by until the operations of the first robot device 11 and the second robot device 13 in S130 and S230 are completed and the workpiece 18 is arranged at the input position.

Next, the controller 122 executes a process in S134. In this process, the controller 122 controls the first claw 104 and the second claw 106 of the chuck device 16 to grip the workpiece 18 arranged at the input position. According to the present example, the controlling of the chuck device 16 is incorporated in the series of processes for the first robot device 11. Alternatively, the controlling of the chuck device 16 may be incorporated in the series of processes for the second robot device 13 or may be an independent process. Next, the controller 122 executes processes for synchronization standby G in S136 and S236. The processes are processes to stand by until the operation of the chuck device 16 in S134 is completed and the workpiece 18 is gripped by the chuck device 16.

Next, the controller 122 executes processes in S138 and S238. In these processes, the controller 122 half-tightens the pressure dies 90 of the first robot 10 and the second robot 12. Accordingly, the first robot device 11 and the second robot device 13 are movable in the longitudinal direction of the workpiece 18. Further, in S140 and S240, the controller 122 moves the first robot device 11 and the second robot device 13 in the longitudinal direction of the workpiece 18 to move the first bending mechanism 50a of the first robot 10 and the second bending mechanism 50b of the second robot 12 to frontward sending positions (i.e., positions to start bending the workpiece 18). The process by the controller 122 after moving the first bending mechanism 50a and the second bending mechanism 50b to the frontward sending positions as described above is the same as the process by known bending machine, as disclosed in Patent Document 1 for example, and hence the description thereof will be omitted herein.

The controller 122 starts the process in Fig. 8 when the both ends of the workpiece 18 are received by the notches 250a of the feeding spots 250 of the workpiece feeding device 20. Alternatively, the controller 122 may execute following control so as to start the process earlier.

That is, when the workpieces 18 are held one by one by a predetermined number or more of holders 220 of the first conveyor 204, the operation of supplying the workpieces 18 one by one to the third conveyor 208 can be remarkably stabilized and performed immediately. Meanwhile, when the number of the holders 220 holding the workpieces 18 is small, like immediately after the activation of the bending machine 2, or for example when no holder 220 holds the workpiece 18, it is difficult to immediately supply the workpiece 18 to the third conveyor 208. In this case, the driving speed of the second conveyor 206 is increased compared with the case where the immediate supply of the workpiece 18 is possible. This control makes it possible to shorten the time, in which the workpiece 18 cannot be supplied to the third conveyor 208, and to start the process in Fig. 8 earlier.

### <Effects of the First Embodiment>

Following effects will be obtained according to the first embodiment described above.
(1a) In the bending machine 2 of the first embodiment, the workpiece feeding device 20 is arranged on one end side in the extending direction of the first track device 4 and the second track device 5 and is configured to supply the workpiece 18. In addition, the workpiece feeding device 20 supplies the workpiece 18 in a manner that the longitudinal direction of the workpiece 18 is orthogonal to the extending direction of the first track device 4 and the second track device 5. Accordingly, it is possible to improve the degree of freedom of the layout of the bending machine 2 as a whole.
   The first robot 10 of the first embodiment includes at least the first turning joint 58 that turns the first robot 10 about the vertical axis CV1 relative to the first base 6 mounting the first robot 10 thereon; and the first swinging joint 52 and the second swinging joint 54 which both bend the first robot 10 about axes nonparallel to the axis of the first turning joint 58. Accordingly, the first robot 10 can move the first bending mechanism 50a in various directions relative to the first base 6. Likewise, the second robot 12 of the first embodiment includes at least the first turning joint 58 that turns the second robot 12 about the vertical axis CV1 relative to the second base 8 mounting the second robot 12 thereon; and the first swinging joint 52 and the second swinging joint 54 which both bend the second robot 12 about axes nonparallel to the axis of the first turning joint 58. Accordingly, the second robot 12 can move the second bending mechanism 50b in various directions relative to the second base 8. In addition, the workpiece feeding device 20 is arranged at a position reachable by the first bending mechanism 50a of the first robot 10 and the second bending mechanism 50b of the second robot 12. Accordingly, even if the workpiece feeding device 20 is arranged on the one end side in the extending direction of the first track device 4 and the second track device 5, it is possible to easily grip and bend the workpiece 18 supplied from the workpiece feeding device 20 by the first bending mechanism 50a of the first robot 10 and the second bending mechanism 50b of the second robot 12.
(1b) The bending machine 2 of the first embodiment is provided with the chuck device 16 between the first track device 4 and the second track device 5. The chuck device 16 grips the workpiece 18 conveyed by the first robot device 11 and the second robot device 13 from the workpiece feeding device 20. Accordingly, it is possible to grip the workpiece 18 by the chuck device 16 and to bend the workpiece 18 by the first bending mechanism 50a of the first robot 10 and the second bending mechanism 50b of the second robot 12. Therefore, it is possible to further favorably improve a processing speed of the workpiece 18.
(1c) The connection relation among the joints of the first robot 10 and the first bending mechanism 50a and the connection relation among the joints of the second robot 12 and the second bending mechanism 50b are configured to be the same. Further, when the controller 122 controls the first bending mechanism 50a of the first robot 10 and the second bending mechanism 50b of the second robot 12 to grip the workpiece 18 supplied by the workpiece feeding device 20, the controller 122 allows the first robot 10 to perform the front side receiving and allows the second robot 12 to perform the rear side receiving. That is, the controller 122 allows gripping the workpiece 18 from a condition where the first robot 10 and the second robot 12 are oriented in directions different from each other by 180 degrees around the vertical axes. The operations of the first robot 10 and the second robot 12 until gripping the workpiece 18 by the chuck device 16 and starting bending from that condition are the same at least in terms of the operations and the like about the vertical axes. Accordingly, in the first embodiment, control programs and so on related to the first robot 10 and the second robot 12 can be at least partially made common.
(Id) It is possible for the workpiece feeding device 20 to hold in advance the workpieces 18 one by one in the respective holders 220 of the first conveyor 204. Accordingly, it is then possible to stably perform the operation to supply the workpieces 18 one by one. Further, the holders 220 orbit to move up along the first conveyor 204 temporarily and then go down. Therefore, it is possible to provide multiple holders 220 at the first conveyor 204 even in a limited space. Hence, it is possible to further stably perform the operation to supply the workpieces 18 one by one.
(1e) When the number of the holders 220 holding the workpieces 1 is small, like immediately after the activation of the bending machine 2, the controller 122 increases the drive speed of the second conveyor 206 compared with the drive speed during the normal bending. Accordingly, it is possible to shorten the time, in which the workpiece 18 cannot be supplied to the third conveyor 208, and to start early the bending by the bending machine 2.
(If) In the first embodiment, the first robot 10 mounted on the first base 6 and the second robot 12 mounted on the second base 8 are multi-articulated robots having the joints as described above, respectively. Therefore, it is possible to arrange the first bending mechanism 50a and the second bending mechanism 50b at desired positions respectively by moving the first base 6 and the second base 8 along the first track device 4 and the second track device 5 and by bending the joints of the multi-articulated robots in desired directions. Therefore, it is possible to arrange the workpiece 18 gripped by at least one of the first bending mechanism 50a and the second bending mechanism 50b at a desired position.
   That is, at conveying or bending the workpieces 18, it is possible to easily move the workpiece 18 to a position where the workpiece 18 does not interfere with the surroundings or a position appropriate for conveying (a position having a short conveying time). According to the embodiment, for example, one end or the other end of the workpiece 18 can be bent at such a favorable position. Therefore, it is possible to improve the freedom of processing and to reduce the processing time.
(1g) According to the first embodiment, the first bending mechanism 50a of the first robot 10 and the second bending mechanism 50b of the second robot 12 grip and bend the workpiece 18 by pinching the workpiece 18 with the bending die 80 and the clamping die 88. Accordingly, it is possible to bend the workpiece 18 accurately along the bending die 80 and to apply accurate bending to the workpiece 18.

### <Second Embodiment>

Next, described below is the bending machine 2 of the second embodiment of the present disclosure. Description of the same features as the first embodiment will be omitted. The bending machine 2 of the second embodiment has the same mechanical structure as the bending machine 2 of the first embodiment. However, the process executed by the controller 122 of the second embodiment is different from the process of the first embodiment in that the workpiece 18 supplied from the workpiece feeding device 20 is gripped by the second robot 12 only. Hereinafter, the process according to the second embodiment is described.

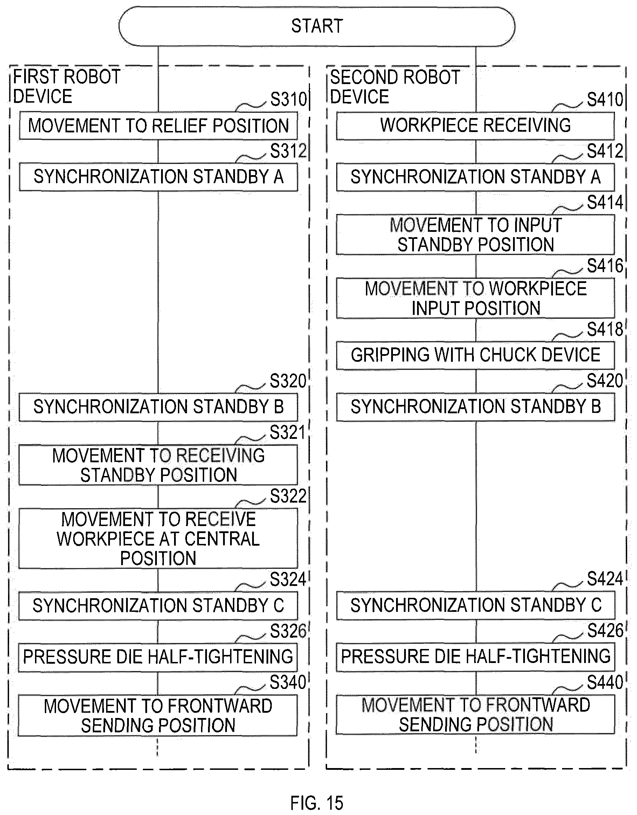

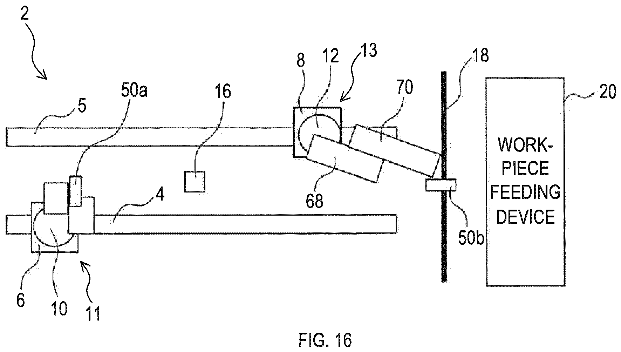

According to the embodiment, a process illustrated in Fig. 15 is started when the both ends of the workpiece 18 are received by the notches 250a of the feeding spots 250 and a signal indicating the receiving is inputted into the controller 122 from the workpiece feeding device 20. In this process, the controller 122 first executes a process in S310 for the first robot device 11 and a process in S410 for the second robot device 13. In S310, as schematically illustrated in Fig. 16, the first base 6 is moved in a direction to be separated from the workpiece feeding device 20 and is positioned at a relief position. The relief position is a position where the first robot device 11 does not interfere with the second robot device 13 and the workpiece 18 when only the second robot 12 works to make the chuck device 16 grip the workpiece 18.

Further, in S410, the second base 8 is sent to the end of the track device 5 on the side of the workpiece feeding device 20, and as schematically illustrated in Fig. 16, the center of the workpiece 18 in the longitudinal direction (i.e. center of gravity) is gripped through the front side receiving by the second bending mechanism 50b of the second robot 12.

Going back to Fig. 15, the controller 122 executes processes for synchronization standby A in S312 and S412. These processes are processes to stand by until the movement to the relief position in S310 and the operation to grip (receive) in S410 are completed.

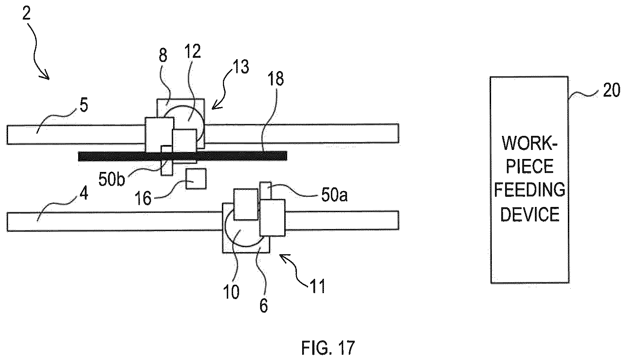

When the process for the synchronization standby A in S412 is ended, as schematically illustrated in Fig. 17, the controller 122 moves the second base 8 to an input standby position (S414). The input standby position is a position to enable the chuck device 16 to grip the workpiece 18 by turning the joints of the second robot 12 without moving the second base 8. In S416 following S414, the controller 122 turns the joints of the second robot 12 to move the workpiece 18 to the input position where the workpiece 18 can be gripped by the first claw 104 and the second claw 106 of the chuck device 16.

In further following S418, the workpiece 18 positioned at the input position is gripped by the first claw 104 and the second claw 106 of the chuck device 16. According to the present example, this process for the chuck device 16 is incorporated in a series of processes for the second robot device 13.

The controller 122 executes processes for a synchronization standby B in S320 and S420. These processes are a standby process until the operation of the chuck device 16 in S418 is competed and the workpiece 18 is gripped by the chuck device 16. The series of processes for the first robot device 11 is in a standby state continuously between the process for the synchronization standby A in S312 and the process for the synchronization standby B in S320.

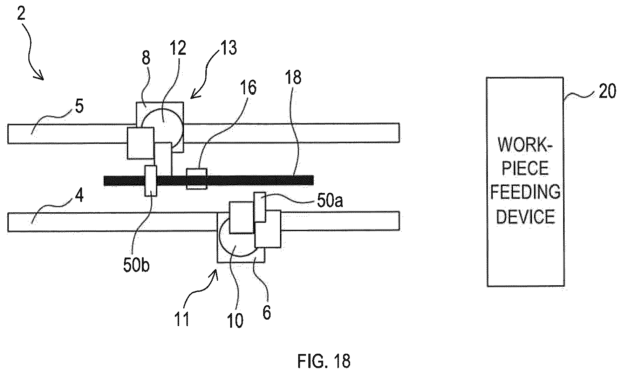

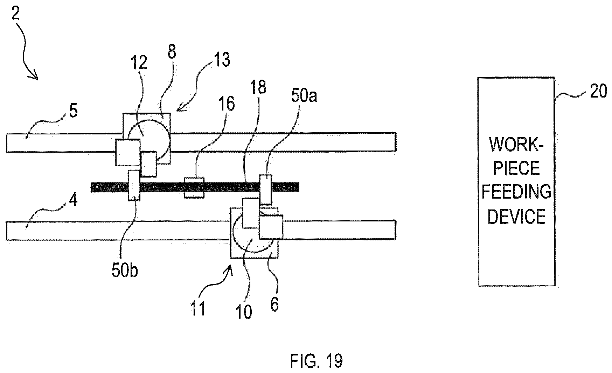

When the process for the synchronization standby B in S320 is completed, the controller 122 executes processes in S321 and S322 for the first robot device 11. In S321, as schematically illustrated in Fig. 18, the controller 122 moves the first base 6 to a receiving standby position. The receiving standby position is a position, where the first bending mechanism 50a of the first robot 10 can grip the workpiece 18 at a position opposite to the second bending mechanism 50b of the second robot 12 as seen from the chuck device 16, by turning the joints of the first robot 10. In S322, as schematically illustrated in Fig. 19, the controller 122 drives the joints of the first robot 10 and the first bending mechanism 50a to allow the first bending mechanism 50a to grip the workpiece 18 gripped by the chuck device 16.

Going back to Fig. 15, the controller 122 executes processes for synchronization standby C in S324 and S424. These processes are standby process until the operation of the first robot 10 in S322 is completed and the workpiece 18 is gripped by the first bending mechanism 50a of the first robot 10. A series of processes for the second robot device 13 is in a standby state continuously between the process for the synchronization standby B in S420 and the process for the synchronization standby C in S424.

When the process for the synchronization standby C in S324 and S424 are completed, the controller 122 executes the same processes as the processes in S138, S140, S238, and S240 of the first embodiment. That is, the controller 122 half-tightens the pressure dies 90 of the first robot 10 and the second robot 12 (S326, S426), and moves the second bending mechanisms 50b of the first robot 10 and the second robot 12 to the frontward sending positions (S340, S440). Also according to the second embodiment, the process by the controller 122 after moving the first bending mechanism 50a and the second bending mechanism 50b to the frontward sending positions is the same as the process by known bending machine, as disclosed in Patent Document 1 for example, and hence the description thereof will be omitted herein.

### <Effects of Second Embodiment>

According to the second embodiment, the effects (1a), (1b), and (1d) to (1g) of the first embodiment are yielded in the same manner.

### <Correspondence to the Elements in Claims>

According to each embodiment, the first turning joint 58 corresponds to an example of a first joint. The first swinging joint 52 and the second swinging joint 54 each correspond to an example of a second joint. The controller 122 corresponds to an example of a speed controller.

### <Other Embodiments>

The embodiments to implement the present disclosure have been described above. However, the present disclosure is not limited to the above embodiments and can be implemented with various modifications.

For example, according to each embodiment, the number of axes of each of the first robot 10 and the second robot 12 is "6-axis". However, the number of axes of the multi-articulated robot of the present disclosure is not limited to "6-axis". For example, the number of axes of the multi-articulated robot may be equal to or greater than "7-axis" or may be "4-axis" or "5-axis". That is, any types of multi-articulated robots are applicable as far as the robot includes at least a first joint that turns the robot about a vertical axis relative to a base and a second joint that bends the robot about an axis nonparallel to the axis of the first joint.

According to each embodiment, the chuck device 16 is movable along the first auxiliary track device 102, but the present disclosure is not limited hereto. For example, the chuck device 16 may be fixed, or there may be a plurality of chuck devices (e.g., three devices) provided along the first auxiliary track device 102.

A plurality of functions performed by a single configuration element of each embodiment may be achieved by a plurality of configuration elements, or a single function of a single configuration element may be achieved by a plurality of configuration elements. A plurality of functions of a plurality of configuration elements may be achieved by a single configuration element, or a single function achieved by a plurality of configuration elements may be achieved by a single configuration element. A part of the configuration of one embodiment may be omitted. At least a part of the configuration of one embodiment may be added to or replace the configuration of the other embodiment. Any modes encompassed within a technical concept specified only by the terms within the claims are applicable as an embodiment of the present disclosure.

In addition to the bending machine described above, the present disclosure can be achieved in various modes such as a system having the bending machine as an element, a program that allows a computer to function as a part of the bending machine, a non-transitional substantial storage medium such as semiconductor memory storing the program, or a method of controlling a bending machine.

## Claims

1. A bending machine configured to bend an elongated workpiece comprising:
a first track device and a second track device arranged in parallel to extend along straight lines parallel to each other;
a first base placed on the first track device to be movable on the first track device;
a second base placed on the second track device to be movable on the second track device;
a first robot mounted on the first base;
a second robot mounted on the second base;
a first bending mechanism arranged at one end of the first robot and configured to grip and bend the workpiece;
a second bending mechanism arranged at one end of the second robot and configured to grip and bend the workpiece; and
a workpiece feeding device provided on one end side in an extending direction of the first track device and the second track device and configured to feed the workpiece,
wherein the first robot is a multi-articulated robot that is provided with a plurality of joints including at least a first joint that rotates the first robot around a vertical axis relative to the first base on which the first robot is mounted and a second joint that bends the first robot around an axis nonparallel to an axis of the first joint of the first robot, and the first robot moves the first bending mechanism by operations of the first joint and the second joint of the first robot,
wherein the second robot is a multi-articulated robot that is provided with a plurality of joints including at least a first joint that rotates the second robot around a vertical axis relative to the second base on which the second robot is mounted and a second joint that bends the second robot around an axis nonparallel to an axis of the first joint of the second robot, and the second robot moves the second bending mechanism by operations of the first joint and the second joint of the second robot, and
wherein the workpiece feeding device is arranged at a position reachable by at least one of the first bending mechanism and the second bending mechanism and is configured to feed the workpiece in a manner that a longitudinal direction of the workpiece is orthogonal to the extending direction of the first track device and the second track device.

2. The bending machine according to claim 1, further comprising:
a chuck device that is arranged between the first track device and the second track device separately from the first track device and the second track device and is configured to grip the workpiece,
wherein the chuck device is configured to grip the workpiece conveyed from the workpiece feeding device by at least one of the first robot and the second robot.

3. The bending machine according to claim 2, further comprising:
a controller configured to control operations of the first base, the second base, the first robot, the second robot, the first bending mechanism, the second bending mechanism, and the chuck device,
wherein a connection relation among the joints of the first robot and the first bending mechanism and a connection relation among the joints of the second robot and the second bending mechanism are configured to be identical to each other, and
wherein, when the controller allows the first bending mechanism and the second bending mechanism to grip the workpiece supplied by the workpiece feeding device, the controller is configured to control the operations of the first joint and the second joint of the first robot and the operations of the first joint and the second joint of the second robot so that a rotation position of the first robot around the first joint thereof is different from a rotation position of the second robot around the first joint thereof by 180 degrees, and a direction from the second joint of the first robot towards the first bending mechanism and a direction from the second joint of the second robot towards the second bending mechanism are respectively directions from the respective second joints towards the workpiece feeding device.

4. The bending machine according to any one of claims 1 to 3, wherein
the workpiece feeding device includes:
a first conveyor including a plurality of holders configured to hold the workpieces one by one, move the workpieces up temporarily, and then move the workpieces down;
a second conveyor configured to supply the workpieces to the holders of the first conveyor; and
a third conveyor configured to convey the workpieces moved up temporarily and then moved down by the holders of the first conveyor one by one to a position where at least one of the first bending mechanism and the second bending mechanism can grip the workpiece.

5. The bending machine according to claim 4, further comprising;
a speed controller configured to increase a drive speed of the second conveyor when the number of the holders of the first conveyor holding the workpieces is less than a predetermined number, compared to a case where the number is equal to or greater than the predetermined number.

6. The bending machine according to any one of claims 1 to 5, wherein each of the first bending mechanism and the second bending mechanism includes a bending die and a clamping die, which is engaged with the bending die, and is configured to grip and bend the workpiece by pinching the workpiece with the bending die and the clamping die.

7. The bending machine according to any one of claims 1 to 6, wherein each of the first robot and the second robot is a vertical multi-articulated robot having six axes or more.
